# EUROPÄISCHE PATENTSCHRIFT

(11) **EP 2 273 826 B1**
(45) Veröffentlichungstag und Bekanntmachung des Hinweises auf die Patenterteilung: **09.05.2012**
(21) Anmeldenummer: 10011939.5
(22) Anmeldetag: 28.07.2004
(51) Int. Cl.: H04W 48/18

(54) **Verfahren zur gemeinsamen Nutzung eines Funkzugangsnetzwerkes durch mehrere Mobilfunkanbieter**
Method for several mobile radio suppliers to jointly use a radio access network
Procédé pour l'utilisation conjointe d'un réseau d'accès radio mobile par plusieurs founisseurs de téléphonie mobile

(30) Priorität: 29.07.2003 DE 10334872
(43) Veröffentlichungstag der Anmeldung: 12.01.2011
(62) Teilanmeldung aus: 04741297.8
(73) Patentinhaber: Telekom Deutschland GmbH, 53184 Bonn (DE)
(72) Erfinder: Klatt, Axel, 50996 Köln (DE)
(74) Vertreter: Schwöbel, Thilo K.

(56) Entgegenhaltungen:
- VILLAGE, WORRAL, CRAWFORD: "3G Shared Infrastructure", 3G MOBILE COMMUNICATION TECHNOLOGIES, CONFERENCE PUBLICATION NO. 489, 8. Mai 2002 (2002-05-08), - 10. Mai 2002 (2002-05-10), Seiten 10-16, XP002317359,
- "digital cellular telecommunications system (Phase 2+); Universal Mobile Telecommunications System (UMTS); Service aspects and requirements for network sharing (3GPP TR 22.951 version 6.1.0 Release 6)", ETSI TECHNICAL REPORT, 1. März 2003 (2003-03-01), Seiten 1-20, XP002317360, SOPHIA ANTIPOLIS, FRANCE

## Beschreibung

Die vorliegend Erfindung betrifft ein Verfahren zur gemeinsamen Nutzung des Funkzugangsnetzwerkes eines Mobilfunksystems durch mehrere Anbieter von Mobilfunkdienstleistungen. Aus unterschiedlichen Gründen (beispielsweise finanziellen oder regulatorischen) sind heutzutage Mobilfunkanbieter gezwungen, Teile ihrer Infrastruktur zur Bereitstellung von Mobilfunkleistungen effizient zu nutzen, gemeinsam zu betreiben bzw. zu teilen.

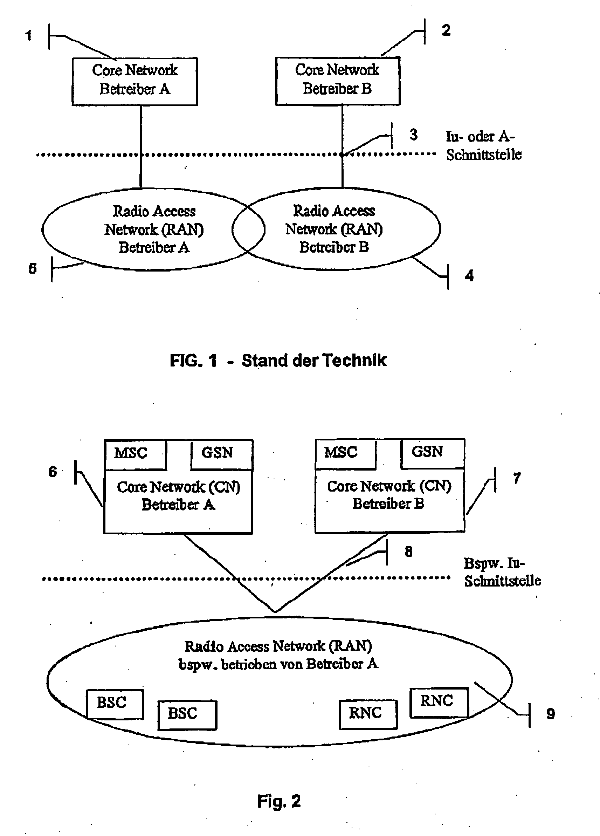

Stand der Technik sind heute sogenannte National-Roaming- Abkommen, bei denen die Mobilfunkfeilnehmer des einen Mobilfunkbetreibers sowohl das Funkzugangsnetz als auch das Kernnetz des jeweiligen Roaming-Partners nutzen dürfen. Die Verfahren zur Bereitstellung dieser Roamingleistungen basieren größtenteils auf standardisierten Verfahren, beispielsweise nach 3GPP-Standards [www.3gpp.org]. Weiterhin sind heute Funkzugangs- und Kernnetz eines Mobilfunkanbieters derart miteinander verbunden, dass die Auswahl eines anderen Kemnetzes, beispielsweise eines Mobile Switching Centers (MSC) zur Erbringung von Circuit Switched (CS)-Verbindungen, beispielsweise für Sprachverbindungen, oder eines anderen Serving GPRS Support Node (SGSN) zur Erbringung von Packet Switched (PS) Verbindungen, beispielsweise Intemetzugang, nicht möglich ist. Die dem heutigen Stand der Technik entsprechende prinzipielle Architektur eines Mobilfunknetzes ist in Figur 1 dargestellt. Die Funkzugangsnetze (Radio Access Network-RAN) 4,5 und die jeweiligen Kemnetze (Core Net-CN) 1,2 der Mobilfunkbetreiber A und B existieren bei beiden (oder mehreren) Mobilfunkbetreibem parallel nebeneinander. Existieren Roaming-Vereinbarungen zwischen den Mobilfunkbetreibern, so können die Mobilfunkteilnehmer des Betreibers A beispielsweise in Gebieten ohne Mobilfunkversorgung durch Betreiber A die Mobilfunkleistungen des Betreibers B über dessen Funkzugangs- und Kernnetz 4,2 nutzen. Hierbei werden diese Leistungen jedoch komplett vom Betreiber B für den Mobilfunkteilnehmer von A erbracht. Nachteil dieser Situation ist u. a., dass die Abrechnung der erbrachten Mobilfunkleistungen zwischen Betreiber A und B durchgeführt werden muss, aber auch dass gegebenenfalls Betreiber B nicht alle Dienste des Betreibers A anbieten kann. Oftmals sind nationale Roaming-Vereinbarungen zwischen Mobilfunkbetreibern geschlossen, die nicht die gleiche Marktposition haben und werden daher gegebenenfalls nur einseitig durchgeführt.

Der Artikel von Village, Worral, Crawford: "3G Shared Infrastructure", 3G Mobile Communication Technologies, Conference Publication No. 489, 8.-10. Mai 2002, Seiten 10-16, XP002317359, beschreibt ein Verfahren zur Bereitstellung bzw. Teilung oder gemeinsamen Nutzung eines Mobilfunk-Funkzugangsnetzwerkes durch mehrere Mobilfunkanbieter, bei dem ein einziges Funkzugangsnetz durch mehrere Mobilfunkanbieter gemeinsam genutzt wird, wobei zur Unterscheidung der Kernnetze der verschiedenen Mobilfunkanbieter die jeweilige Identität der Netzbetreiber, PLMN Identity, im Funkzugangsnetzwerk dem Mobilfunkteilnehmer über die Aussendung von mehr als einer Mobilfunkbetreiberkannung auf einem Organisationskanal bereitgestellt wird.

Die Technische Schrift "Digital cellular communication (phase 2+); Universal Mobile Telecommunication System (UMTS) ; Service aspects and requirements for network sharing, 3GPP TR 22.951, Version 6.1.0, Release 6, ETSI Technical report, 1. März 2003, Seiten 1-20, XP002317360, beschreibt ebenfalls die Möglichkeit der gemeinsamen Nutzung von Metzwerkelementen, insbesondere des Funkzugangsnetzes, durch mehrere Netzbetreiber.

Aufgabe der vorliegenden Erfindung ist es daher, eine bessere Ausnutzung der Infrastruktur von Mobilfunknetzen unterschiedlicher Betreiber zu ermöglichen, um so einerseits die Wirtschaftlichkeit zu steigern und andererseits Anforderungen an den Umweltschutz besser gerecht zu werden.

Diese Aufgabe wird durch die Merkmale der Ansprüche 1 und 10, auf welche hiermit Bezug genommen wird.

Bevorzugte und vorteilhafte Weiterbildungen der Erfindung sind in den abhängigen Ansprüchen 2-9 und 11 enthalten, auf die hiermit Bezug genommen wird.

Mit dem erfindungsgemäßen Verfahren ergibt sich die Möglichkeit, ein gemeinsames Funkzugangsnetz für verschiedene Mobilfunkanbieter zugänglich zu machen, indem ein Mobilfunkteilnehmer aus mehreren, von einem gemeinsamen Funkzugangsnetzwerk abgestrahlten vorzugsweise PLMN IDs eine auswählt und über das zugehörige Kernnetz des ausgewählten Mobilfunkbetreibers Dienste (CS oder PS) in Anspruch nimmt. Die vorliegende Erfindung stellt eine wesentliche Verbesserung des Stands der Technik dar, da sie es ermöglicht, ein gemeinsames Funkzugangsnetz (Radio Access Network - RAN) zu benutzen und separate Kemnetze (Core Networks - CN) für die verschiedenen Mobilfunkbetreiber bereit zu stellen.

Bevorzugte Ausführungsbeispiele der Erfindung werden im Folgenden anhand der Zeichnungsfiguren erläutert.

Es zeigen:
- Figur 1:: schematisch ein Beispiel für die Architektur von zwei nebeneinander ' betriebenen Mobilfunknetzen nach dem Stand der Technik;
- Figur 2:: die prinzipielle Konfiguration bzw. Architektur von zwei Mobilfunksystemen mit gemeinsam genutztem Mobilfunkzugangsnetz gemäß der Erfindung ;
- Figur 3:: ein Anwendungsbeispiel des Systems gemäß Figur 2;
- Figur 4a:: Stand der Technik von MIB-und SIB1-Übertragung auf BCCH;
- Figur 4b:: Zusätzliche PLMN ids übertragen im MIB, auf dem BCCH;
- Figur 4c:: Zusätzliche PLMN ids übertragen im SIB1 ;
- Figur 4d:: Zusätzliche PLMN ids übertragen im MIB und zusätzliche SIB1 pro PLMN;
- Figur 4e:: Zusätzliche PLMN ids übertragen im MIB und zusätzliche SIB1 pro PLMN für jedes unterstütze PLMN;
- Figur 4f:: Einführung komplett neuer MIBs und SIB1 für jedes unterstütze PLMN.

Die vorliegende Erfindung sieht eine prinzipielle Konfiguration bzw. Architektur des Mobilfunkzugangs- und Kemnetzes nach Figur 2 vor. Hierbei wird ein einziges gemeinsames Funkzugangsnetz 9, beispielsweise nach UMTS-oder GSM-Standard, mit zwei (oder mehr) Kemnetzen 6,7 verbunden und dem Mobilfunkteilnehmer die Dienste durch das Kernnetzwerk des jeweiligen ausgewählten Mobilfunkbetreibers zur Verfügung gestellt, wobei der Zugang zu diesem Kernnetz jedoch über das gemeinsam genutzte Funkzugangsnetz erfolgt, die Bedienung im Kernnetz jedoch getrennt. Nach dem Stand der Technik kann eine Architektur nach Figur 1 einem Mobilfunkteilnehmer nur die Dienste eines einzigen Mobilfunkanbieters bereitstellen, welches von dem benutzten Funkzugangsnetzwerk 5 oder 4 abhängig ist (über die Auswahl des Funkzugangsnetzes erfolgt die Auswahl des eigentlichen Mobilfunkbetreibers). Sollen die Dienste eines anderen Mobilfunkbetreibers genutzt werden, muss hierzu auch das entsprechende Funkzugangsnetz gewechselt werden, da ein Funkzugangsnetz 5 oder 4 nach dem Stand der Technik nur den Zugang zu genau einem Kernnetz 1 oder 2 des entsprechenden Betreibers erlaubt. In diesem Fall stehen einem Mobilfunkteilnehmer auch nur die PS- und die CS-Kemnetzelemente des einen Funkzugangsnetzbetreibers zur Verfügung.

Die Identität des Mobilfunkbetreibers wird heute durch die Aussendung einer sogenannten Betreiber-Kennung (Public Land Mobile Network Identity - PLMN id) auf einen Organisationskanal (Broadcast Control Channel - BCCH) allen potentiellen Mobilfunkteilnehmem im Empfangsbereich des Funkzugangsnetzwerkes mitgeteilt. Nach Aktivierung des Teilnehmerendgerätes (Mobilstation "MS" bei GSM, bzw. User Equipment "UE" bei UMTS), wählt dieses nach standardisierten Verfahren [z.B. 3GPP TS 22.011] das Mobilfunknetz aus, von welchem es Dienste zur Verfügung gestellt haben möchte ("PLMN selection"). Grundlage dieser Mobilfunk-Betreiberauswahl ist die eindeutige Existenz der Kennung (PLMN id) auf dem BCCH jedes Mobilfunkzugangsnetzes. Nach dem Stand der Technik ist es nicht möglich, mehr als eine Mobilfunk-Netzbetreiber-Kennung (PLMN id) auf dem BCCH eines Mobilfunkzugangsnetzes auszustrahlen.

Das vorliegende erfindungsgemäße Verfahren ermöglicht es nunmehr, dem Mobilfunkteilnehmer bzw. im automatischen Modus [3GPP TS-23.122] dem Teilnehmerendgerät selbst, die Auswahl des Kemnetzes, und damit des gewünschten Mobilfunkbetreibers, basierend auf der Ausstrahlung weiterer PLMN ids auf dem BCCH des Funkzugangsnetzes festzulegen, ohne dafür das Funkzugangsnetz zu wechseln. Erfindungsgemäß sind mehrere Kernnetze sind mit einem Funkzugangsnetz verbunden.

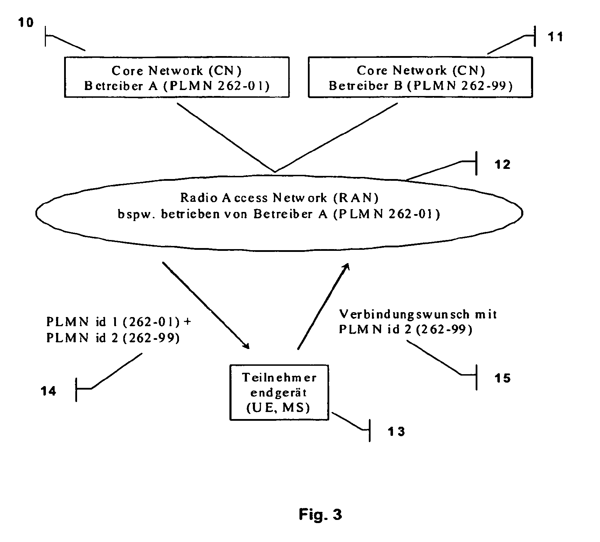

Dieses Prinzip ist das Grundprinzip des erfindungsgemäßen Verfahrens und in Figur 3 dargestellt.

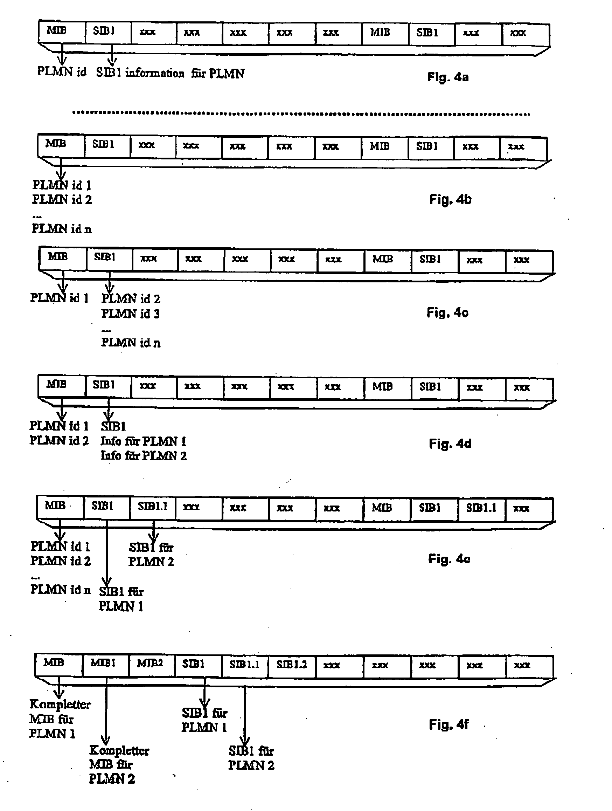

Die Ausstrahlung der PLMN Id 14 des Funkzugangsnetzwerkes 12 und damit des Betreibers des Mobilfunksystems ist beispielsweise für ein System nach dem GSM-Standard in [3GPP TS 04.18] und für ein Mobilfunksystem nach UMTS-Standard in [3GPP TS 25.331] beschrieben. Beide Standards nutzen den Organisationskanal (BCCH) zur Abstrahlung dieser Informationen. Für ein Mobilfunksystern nach GSM-Standard erfolgt die Ausstrahlung der PLMN id im System Information type 3; für ein Mobilfunksystem nach UMTS-Standard im Master Information Block (MIB). Beiden Systemen gemeinsam ist, dass die Netzkennung (PLMN id) aus einer Folge von Ziffern (Digits) besteht, die das Format "abc-xyz" aufweisen. Hierbei bezeichnet "abc" den sogenannten Mobile Country Code (MCC), welcher dem Teilnehmerendgerät 13 mitteilt, um welches Land es sich handelt (beispielsweise"262" für Deutschland) und "xyz" den Mobile Network Code (MNC), welcher die Mobilfunkbetreiber innerhalb eines Landes unterscheidet (beispielsweise 01 für T-Mobile D in Deutschland). Hierbei kommen in verschiedenen Ländern MNC mit 2 oder 3 Digits vor. Gemeinsam ist Systemen nach UMTS- und GSM-Standard, dass die Ausstrahlung der PLMN-Kennung auf regelmäßiger Basis auf dem Organisationskanal BCCH wiederholt wird, damit Mobilfunkendgeräte 13 nicht unnötig lange warten müssen, bis die Information über die Identität des Mobilfunknetzes vorliegt. Beispielsweise wird der MIB nach dem UMTS-Standard alle 8 BCCH-Blöcke wiederholt (dargestellt in Figur 4a).

Nach [3GPP TS 25. 331] ist der MIB für den BCCH folgendermaßen strukturiert:
| MIB
   ->PLMN id
      ->MCC
      ->MNC
   | (andere Informationen)

Mit dieser Struktur lässt sich mit dem Stand der Technik [3GPP TS 25.331] nur eine einzige Mobilfunknetzkennung 14, also eine Kombination aus MCC & MNC, an das Teilnehmerendgerät 13 übertragen.

Vorgeschlagen wird als erfindungsgemäßes Verfahren, im MIB mehr als eine PLMN id zu übertragen, um hiermit die Möglichkeit zu schaffen, verschiedene Kemnetze 10, 11 über ein gemeinsames Funkzugangsnetz 12 bekannt zu geben und somit erreichbar für ein Teilnehmerendgerät 13 zu machen.

Eine Struktur für den MIB nach dem erfindungsgemäßen Verfahren wurde beispielsweise folgendermaßen aussehen:
| MIB
   - >PLMN id1
      ->MCC
      ->MNC
   - >PLMN id2
      ->MCC
      ->MNC
   - >PLMN id"n"
      -> MCC
      ->MNC
   | (andere Informationen)

Mit dieser Struktur des MIB auf dem Organisationskanal BCCH ist es möglich, jedem Teilnehmerendgerät innerhalb des Mobilfunkzugangsnetzes mehr als eine PLMN Id mitzuteilen und damit zur Auswahl zu stellen (dargestellt in Figur 4b).

Alternativ kann zur Bekanntgabe weiterer PLMN identities auch ein anderer System Information Block (SIB) des BCCH, beispielsweise der System Information Block 1 (SIB1) genutzt werden, wie es in Figur 4c dargestellt ist. Dieser wird üblicherweise für die Bekanntgabe von Kernnetz-Informationen benutzt [3GPP TS 25.331]. Hier kann prinzipiell ebenfalls eine Erweiterung um zusätzliche PLMN identities vorgenommen werden, indem die PLMN id 2, PLMN id 3, usw. im SIB1 übertragen werden. Weiterhin ist auch die Definition eines oder mehrerer zusätzlicher MIBs möglich, die sämtliche Informationen nach dem heutigen Verfahren für die jeweiligen zusätzlichen PLMNs beinhalten Figur 4f).

Weiterer wesentlicher Bestandteil des vorliegenden Verfahrens ist die Beibehaltung der Exklusivität des ausgewählten Mobilfunkbetreibers. In anderen Worten: ein Mobilfunkendgerät 13 muss aus der angebotenen Auswahl an Mobilfunkbetreibem einen auswählen, welcher die Dienste bereitstellen soll. Dieses hindert das Mobilfunkendgerät (oder den Nutzer) 13 nicht daran, den Mobilfunkbetreiber 10,11 zu wechseln, ohne jedoch das Funkzugangsnetz 12 an sich zu wechseln.

Wesentlicher Nachteil des Standes der Technik ist außerdem die fehlende Möglichkeit, der Funkzugangs-Netz-Kontrolleinheit (bei UMTS: Radio Network Controller - RNC; bei GSM: Base Station Controller - BSC) mitzuteilen, mit welchem der möglichen Kernnetzwerke 10,11 ein Mobilfunkendgerät 13 verbunden werden möchte. Hierzu ist es notwendig dem RNC/BSC bei der Registrierung mitzuteilen, mit welchem der möglichen Kernnetzwerke (die hier dann gleichbedeutend mit Mobilfunkbetreibern sind) 10. 11 die Registrierung erfolgen soll. Basierend auf der Auswahl des Teilnehmerendgerätes 13, baut der RNC/BSC die Verbindung (beispielsweise über das lu-Interface 8 bei UMTS-Systemen) zum entsprechenden Kernnetz 10, 11 auf und dort erfolgt die Registrierung wie nach UMTS- bzw. GSM-Standard üblich.

Hierzu ist es notwendig, dass das Teilnehmerendgerat 13, wie vorstehend beschrieben, Kenntnis von der Existenz mehrerer Kernnetzwerke 10,11 bzw. Mobilfunkbetreiber innerhalb eines Funkzugangsnetzwerkes 12 bekommen hat und sich für die Registrierung in einem einzigen, basierend auf der PLMN identity, entschieden hat. Während der Registrierungsprozedur ist es deshalb notwendig, dass das Teilnehmerendgerat dem RNC/BSC mitteilt 15, für welchen der möglichen Mobilfunkbetreiber (basierend auf der PLMN id) 10,11 es sich. entschieden hat. Hierzu sind eine Reihe von Realisierungsmöglichkeiten denkbar:

Zur Durchführung einer Registrierung eines Teilnehmerendgerätes 13 gegenüber einem Mobilfunknetz 10 oder 11 ist es notwendig, dass ein Teilnehmerendgerät 13 mit der Funkzugangsnetz-Kontrolleinheit (RNC/BSC) (in 12) in Verbindung tritt. Bei MobilfunkSystemen nach dem Stand der Technik ist es nicht notwendig, die Funkzugangsnetz-Kontrolleinheit (RNC/BSC) (in 12) über das gewählte PLMN 10 oder 11 in Kenntnis zu setzten, da es auf Seiten des Kemnetzes 10, 11 nur eine Möglichkeit gibt, da das komplette Kernnetz vom Betreiber des Funkzugangsnetzwerkes betrieben wird. Anders verhält es sich bei dem erfindungsgemäßen Verfahren, da hier die Funkzugangsnetz-Kontrolleinheit (RNCIBSC) (in 12) zusätzlich informiert werden muss, zu welchem der Kemnetzelemente 10 oder 11 die Verbindung zwecks Registrierung aufgebaut werden muss.

In UMTS-Systemen erfolgt der Verbindungsaufbau von Seiten des Teilnehmerendgerätes 13 über eine RRC CONNECTION REQUEST Nachricht [3GPP TS 25.331]. Diese kann vorteilhafterweise zur Übertragung 15. der Kennung des ausgewählten PLMNs 10 oder 11, also des Mobilfunkbetreibers, vom Teilnehmerendgerat 13 zur Funkzugangsnetz-Kontrolleinheit (RNC/BSC) (in 12) genutzt werden. Hierzu ist es notwendig die Information über das gewählte PLMN in dieser oder einer anderen Nachricht zu übertragen 15. Die Übertragung kann beispielsweise in Form von MCC und MNC erfolgen. Ein einfacheres und Ressourcen sparendes Verfahren benutzt eine Indikation des gewählten PLMNs durch eine Referenzbeziehung zur Ausstrahlung der zusätzlichen PLMNs auf dem BCCH. Hierzu ist beispielsweise eine Bitfolge von 3 Bits notwendig durch die 8 verschiedene PLMNs adressiert werden können. Die Referenz könnte sich in diesem Fall beispielsweise auf die Reihenfolge der Ausstrahlung der PLMN ids auf. dem Organisationskanal BCCH beziehen. Werden beispielsweise drei PLMNs (PLMN0, PLMN1 und PLMN2) auf dem Organisationskanal BCCH ausgestrahlt, die das Funkzugangsnetz 12 gemeinsam nutzen, so wurde eine Indikation der Bitfolge "010" bedeuten, dass das Teilnehmerendgerät 13 eine Verbindung zum PLMN2 wünscht. Die Unterstützung von bis zu 8 Kemnetzen (wie 10 oder 11) ist unter praktischen und betrieblichen Gesichtspunkten ausreichend. Das Verfahren kann nach dem gleichen Schema jedoch auch für jede beliebige Anzahl von zu unterstützenden Kernnetzwerken bzw. Mobilfunkanbietern vorteilhaft genutzt werden. Als weitere Alternativrealisierung kann auch ein einzelnes Bit zur Indikation des "default" Kemnetzes eingeführt werden, welches sich aus der IMSI ("International mobile subscriber identity" - int. Kennung für Mobilfunkteilnehmer) des Teilnehmerendgerätes direkt ableitet. Hierzu wäre die Signalisierungsmöglichkeit für ein Default ("ja"/"nein") in der Signalisierung vom Teilnehmerendgerät zum Mobilfunkzugangsnetz einzuführen, woraufhin der RNC die Verbindung mit dem Kernnetz bzw. Netzwerkbetreiber basierend auf der IMSI des Teilnehmerendgerätes herstellt. Die Kontrolle über die Benutzung der Default-Signalisierung oder der vollständigen Signalisierung des gewünschten Kemnetzes (Mobilfunkanbieters) kann beispielsweise aber ein einzelnes Bit oder auch eine andere Realisierung auf dem Organisationskanal (BCCH) des Funkzugangsnetzes realisiert werden.

Weiterhin ermöglicht das erfindungsgemäße Verfahren die Bereitstellung von unterschiedlichen Kemnetz-Parametersätzen durch die Benutzung weiterer System Information Blocks 1 (SIB1) auf dem Organisationskanal BCCH eines Mobilfunknetzes. Diese Informationen enthalten beispielsweise Informationen die zur Kommunikation mit einem Kernnetz benötigt werden und können sich je nach Art des Kernnetzes unterscheiden. Hierzu ist die Einführung zusätzlicher SIB1 (z.B. SIB1.1, SIB1.2 etc oder SIB1 bis, SIB1ter) auf dem BCCH notwendig, welche es ermöglichen, für jedes der unterstützen Kemnetze 10 oder 11 dem potentiellen Teilnehmerendgerät 13 über ein gemeinsames Funkzugangsnetz 12 einen eigenen Satz an zu verwendenden Kernnetz-Parametern (gegebenenfalls unterschiedliche) bereit zu stellen, wie in Figur 4e und auch 4f dargestellt. Basierend auf der Auswahl des Mobilfunkbetreibers aufgrund der im gemeinsamen Funkzugangsnetz 12 abgestrahlten PLMN id 14, liest das Teilnehmerendgerät 13 nur die jeweils benötigten Information für das gewählte PLMN aus dem entsprechenden SIB1 aus.

Eine Alternativrealisierung des erfindungsgemäßen Verfahrens basiert auf der dedizierten Bereitstellung einer oder mehrerer alternativer Mobilfunknetzbetreiberkennungen (PLMN ids) (wie 14). Hierbei wird nicht der Organisationskanal BCCH des Funkzugangsnetzes 12 zur Übermittlung weiterer PLMN ids genutzt, sondern die Information über weitere mögliche PLMNs dem Teilnehmerendgerat 13, beispielweise in einer der üblichen GSM oder UMTS Teilnehmerendgerät - Netz Kommunikations-Prozeduren, wie z.B. der Registrierungsprozedur, der "PDP context activation" oder der "Location Registration" Prozedur, mitgeteilt. Dieses neuartige erfindungsgemäße Verfahren hat den Vorteil, dass die Übermittlung der zusätzlichen Mobilfunkbetreiberkennungen für jedes einzelne Mobilfunkendgerät 13 getrennt vorgenommen werden kann und die entsprechenden Listen der möglichen Mobilfunknetzbetreiber pro Teilnehmerendgerät-Netz Beziehung bereit gestellt werden können.

Zur weiteren Nutzung, dieser bereitgestellten Informationen über zusätzliche Mobilfunkbetreiber sind prinzipiell unterschiedliche Möglichkeiten vorhanden: Beispielsweise kann einem Teilnehmerendgerät 13 auf diese Weise mitgeteilt werden, dass eine Gruppe von Mobilfunknetzwerken (PLMNs) als ein gemeinsames Netzwerk betrachtet werden kann. Dieses ermöglicht dem Teilnehmerendgerät 13 aufgrund von auf dem Organisationskanal BCCH abgestrahlten "cell reselection" Parametern, beispielsweise nach UMTS- oder GSM-Standard, zwischen verschiedenen Zellen eines Mobilfunksystems, hier zwischen Zellen in verschiedenen Funkzugangsnetzen, zu wechseln, als seien diese zu einem einzigen Mobilfunkzugangs-4,5 bzw.Kernnetz 1,2 gehörig (Mobilfunkbetreiber).

Eine alternative Realisierung nutzt die dem Teilnehmerendgerät übermittelten Informationen in gleicher Weise wie oben beschrieben zur Auswahl und Übermittlung des Verbindungswunsches (Fig. 3). Hierbei wurde die Information über den Verbindungswunsch mit einem anderen Mobilfunknetzbetreiber gegenüber dem registrierten Mobilfunknetzbetreiber (aktueller Betreiber) signalisiert 15, und dieser wurde über sein eigenes Funkzugangsnetz den Zugang zum Kernnetz eines anderen Mobilfunknetzbetreibers bereitstellen können. Alternativ können auch über den aktuell registrierten Mobilfunknetzbetreiber die Dienste erbracht werden, die Leistungen jedoch basierend auf dem übermittelten Verbindungswunsch abgerechnet werden (quasi eine Art "Call-by-Call" für Mobilfunkleistungen). Ähnliche Verfahren finden im Bereich der Festnetztelefonie heute bereits Anwendung, wobei die Auswahl des eigentlichen Kernnetzbetreibers durch die Übermittlung einer bestimmten "Vor-Vorwahl" durchgeführt wird. Mit der Übermittlung der gewünschten Mobilfunknetzbetreiberkennung (PLMN id) nach einem der oben aufgeführten Verfahren kann beispielsweise die Funkzugangsnetz-Kontrolleinheit (RNC oder BSC) die entsprechenden Verbindungen zu einem der möglichen Kemnetze entsprechend der Auswahl bereitstellen oder diese Information im Gebührenerfassungssystem des Mobilfunkanbieters ausgewertet werden.

Ausführungsformen der Erfindung
1. Ausführungsform: Verfahren zur Bereitstellung bzw. Teilung oder gemeinsamen Nutzung eines Mobilfunk-Funkzugangsnetzwerkes durch mehrere Mobilfunkanbieter, dadurch gekennzeichnet, dass ein einziges Funkzugangsnetz (9; 12), beispielsweise nach UMTS-, cdma2000- oder GSM-Standard, durch mehrere Mobilfunkanbieter gemeinsam genutzt wird.
2. Ausführungsform: Verfahren nach Ausführungsform 1, dadurch gekennzeichnet, dass zur Bereitstellung der Mobilfunkleistungen notwendigen Netzelemente eines Kemnetzes (6, 7; 10 ,11) (Code Network, beispielsweise MSC und/oder GSN) von jedem der Mobilfunkanbieter separat bereit gestellt werden.
3. Ausführungsform: Verfahren nach einer der Ausführungsformen 1-2, dadurch gekennzeichnet, dass Netzelemente des Kemnetzes (6, 7; 10, 11) (CN) beispielsweise zur Bereitstellung von Sprachverbindungen (MSC) gemeinsam genutzt werden, andere Netzelemente zur Bereitstellung von IP-Verbindungen (Packet Network, GSN) jeweils von unterschiedlichen Betreibern bereitgestellt werden.
4. Ausführungsform: Verfahren nach einer der Ausführungsformen 1-3, dadurch gekennzeichnet, dass zur Unterscheidung der Kemnetze (6, 7; 10,11) der verschiedenen Mobilfunkanbieter die jeweilige Identität der Netzbetreiber (PLMN identity) im Funkzugangsnetzwerk (RAN oder BSS) dem Mobilfunkteilnehmer (UE oder MS) über die Aussendung von mehr als einer Mobilfunkbetreiberkennung (PLMN identity) bereitgestellt wird.
5. Ausführungsform: Verfahren nach einer der Ausführungsformen 1-4, dadurch gekennzeichnet, dass die Ausstrahlung von mehr als einer Mobilfunkbetreiberkennung (PLMN identity) auf einem Organisationskanal (beispielsweise dem Broadcast Control Channel-BCCH) vorgenommen wird.
6. Ausführungsform: Verfahren nach einer der Ausführungsformen 1-5, dadurch gekennzeichnet, dass die Ausstrahlung von mehr als einer PLMN identity, beispielsweise in dem Master Information Block (MIB) auf dem BCCH eines Mobitfunksystems nach UMTS-Standard oder im System Information Type 3 (SI3) bei einem Mobilfunksystem nach GSM-Standard, erfolgt.
7. Ausführungsform: Verfahren nach einer der Ausführungsformen 1-6, dadurch gekennzeichnet, dass die Ausstrahlung von mehr als einer PLMN identity in dem Master Information Block (MIB) und dem System Information Block 1 (SIB1) auf dem BCCH eines Mobilfunksystems nach UMTS-Standard erfolgt.
8. Ausführungsform: Verfahren nach einer der Ausführungsformen 1-7, dadurch gekennzeichnet, dass die Ausstrahlung von mehr als einer PLMN identity in dem System Information Block 1 (SIB1) auf dem BCCH eines Mobilfunksystems nach UMTS-Standard erfolgt.
9. Ausführungsform: Verfahren nach einer der Ausführungsformen 1-8, dadurch gekennzeichnet, dass die Ausstrahlung von mehr als einer PLMN identity in einem anderen System Information Block außer dem Master Information Block (MIB) oder dem System Information Block 1 (SIB1) auf dem BCCH eines Mobilfunksystems nach UMTS-Standard erfolgt.
10. Ausführungsform: Verfahren nach einer der Ausführungsformen 1-9, dadurch gekennzeichnet, dass die Ausstrahlung von mehr als einer PLMN identity in einem anderen Block außer dem System Information type 3 (SI3) auf dem BCCH eines Mobilfunksystems nach GSM- Standard erfolgt.
11. Ausführungsform: Verfahren nach einer der Ausführungsformen 1-10, dadurch gekennzeichnet, dass der Teilnehmer / das Teilnehmerendgerat (13) bei Äußerung des Verbindungswunsches gegenüber dem Funkzugangsnetzwerk (9; 12) mitteilt, mit welchem der unterschiedlichen Kernnetzwerke (6,7; 10,11) bzw. PLMNs der Verbindungsaufbau erfolgen soll.
12. Ausführungsform: Verfahren nach einer der Ausführungsformen 1-11, dadurch gekennzeichnet, dass der Teilnehmer / das Teilnehmerendgerat (13) bei Äußerung des Verbindungswunsches gegenüber dem Funkzugangsnetzwerk (9; 12) mitteilt, mit welchem der unterschiedlichen Kernnetzwerke (6,7; 10,11) der Verbindungsaufbau erfolgen soll, und diese Mitteilung auf der Übersendung der PLMN id in der RRC CONNECTION REQUEST oder der INITIAL DIRECT TRANSFER Nachricht in einem Mobilfunksystem nach UMTS-Standard erfolgt.
13. Ausführungsform: Verfahren nach einer der Ausführungsformen 1-12, dadurch gekennzeichnet, dass der Teilnehmer / das Teilnehmerendgerät (13) bei Äußerung des Verbindungswunsches gegenüber dem Funkzugangsnetzwerk (9;12) mitteilt, mit welchem der unterschiedlichen Kernnetzwerke (6, 7; 10,11) der Verbindungsaufbau erfolgen soll, und diese Mitteilung auf der Übersendung der PLMN id in der RRC CONNECTION REQUEST oder der INITIAL DIRECT TRANSFER Nachricht in einem Mobilfunksystem nach UMTS-Standard erfolgt, wobei die PLMN identity als MCC+MNC angegeben wird.
14. Ausführungsform: Verfahren nach einer der Ausführungsformen 1-13, dadurch gekennzeichnet, dass der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6, 7;10, 11) der Verbindungsaufbau erfolgen soll, und diese Mitteilung auf der Übersendung der Netzbetreiberkennung (bspw. PLMN id) in der RRC CONNECTION REQUEST oder der INITIAL DIRECT TRANSFER Nachricht in einem Mobilfunksystem nach UMTS-Standard erfolgt, wobei lediglich der MNC der PLMN identity übermittelt wird.
15. Ausführungsform: Verfahren nach einer der Ausführungsformen 1-14, dadurch gekennzeichnet, dass der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6, 7; 10, 11) der Verbindungsaufbau erfolgen soll, und diese Mitteilung auf der Übersendung der Netzbetreiberkennung (bspw. PLMN id) in der RRC CONNECTION REQUEST oder der INITIAL DIRECT TRANSFER Nachricht in einem Mobilfunksystem nach UMTS-Standard erfolgt, wobei die PLMN identity als integer (1,2, 3... n) oder bitstring (z.B."001") angegeben wird, und die Festlegung der eigentlichen PLMN identity aus der Reihenfolge des Sendens der unterschiedlichen PLMN identities auf dem BCCH abgeleitet wird.
16. Ausführungsform: Verfahren nach einer der Ausführungsformen 1-15, dadurch gekennzeichnet, dass der Teilnehmer / des Teilnehmerendgerat (13) bei Äußerung des Verbindungswunsches gegenüber dem Funkzugangsnetzwerk (9; 12) mitteilt, mit welchem der unterschiedlichen Kernnetzwerke (6, 7; 10, 11) der Verbindungsaufbau erfolgen soll, und diese Mitteilung auf der Übersendung der Netzbetreiberkennung (bspw. PLMN id) weder in der RRC CONNECTION REQUEST noch in der INITIAL DIRECT TRANSFER Nachricht in einem Mobilfunksystem nach UMTS-Standard erfolgt.
17. Ausführungsform: Verfahren nach einer der Ausführungsformen 1-16, dadurch gekennzeichnet, dass die Ausstrahlung von mehr als einer PLMN id in dem System Information Block 1 (SIB1) auf dem BCCH eines Mobilfunksystems nach UMTS-Standard erfolgt oder innerhalb eines SIB1 Kernnetzinformationen von mehr als einem Kernnetz ausgestrahlt werden.
18. Ausführungsform: Verfahren nach einer der Ausführungsformen 1-17, dadurch gekennzeichnet, dass auf dem Organisationskanal (BCCH) des Funkzugangsnetzes (9; 12), beispielsweise über ein einzelnes Bit, signalisiert wird, ob die Funknetzressourcenverwaltungseinheit (RNC bzw. BSC) den Verbindungswunsch des Teilnehmers / des Teilnehmerendgerätes (13) mit einem der Kernnetze (6, 7; 10, 11) basierend auf der IMSI des Teilnehmerendgerätes bereit stellt ("default" Auswahl aufgrund der Teilnehmer-IMSI).
19. Ausführungsform: Verfahren nach einer der Ausführungsformen 1-18, dadurch gekennzeichnet, dass auf dem Organisationskanal (BCCH) des Funkzugangsnetzes (9; 12), beispielsweise über ein einzelnes Bit, signalisiert wird, ob die Funknetzressourcenverwaltungseinheit (RNC bzw. BSC) den Verbindungswunsch des Teilnehmers mit einem der Kernnetze (6; 7, 10, 11) basierend auf der IMSI des Teilnehmerendgerätes (13) bereit stellt ("default" Auswahl aufgrund der Teilnehmer-IMSI), und die Auswahl der "default" Signalisierung aufgrund der IMSI oder die Übermittlung der Mobilfunknetzbetreiberkennung (bspw. PLMN id) nach einem der vorstehenden Verfahren durch eine Signalisierung (bspw. ein Bit) auf dem Organisationskanal (BCCH) durchgeführt wird.
20. Ausführungsform: Verfahren nach einer der Ausführungsformen 1 bis 19, dadurch gekennzeichnet, dass einem Teilnehmerendgerat (13) in einem Mobilfunksystem nach UMTS-oder GSM-Standard mehr als eine Mobilfunknetzbetreiberkennung (PLMN identity) übermittelt wird.
21. Ausführungsform: Verfahren nach einer der Ausführungsformen 1 bis 20, dadurch gekennzeichnet, dass die Übermittlung weiterer Mobilfunknetzbetreiberkennungen (bspw. PLMN ids) und damit Netzbetreiber, welche das Teilnehmerendgerat (13) potentiell nutzen darf, auf einer dedizierten Signalisierung zwischen Funkzugangsnetz (9; 12) oder Kernnetz (6, 7; 10,11) und Teilnehmerendgerat (13) erfolgt.
22. Ausführungsform: Verfahren nach einer der Ausführungsformen 1 bis 21, dadurch gekennzeichnet, dass die Übermittlung zusätzlicher PLMN ids immer dann durchgeführt wird, wenn sich ein Teilnehmerendgerat (13) bei einem Mobilfunknetz zwecks Registrierung anmeldet, einen Dienst aktuell nutzt' (beispielsweise Im Rahmen einer "PDP-Context Activation"), oder seinen aktuellen Aufenthaltsort dem Mobilfunknetz gegenüber anzeigt (z. B. im Fall sich bewegender Teilnehmerendgerate beispielsweise mittels Location Registration Prozeduren).
23. Ausführungsform: Verfahren nach einer der Ausführungsformen 1 bis 22, dadurch gekennzeichnet, dass die Übermittlung zusätzlicher möglicher Mobilfunknetzbetreiberkennungen dediziert pro Netz-Teilnehmerendgeräte-Beziehung oder aufgrund einer Ausstrahlung auf dem Organisationskanal BCCH, erfolgt ist, und diese Informationen vom Teilnehmerendgerät (13) derart genutzt werden, dass eine Nutzung von Funkzugangsressourcen eines anderen Mobilfunkbetreibers möglich ist, als wären sie zum registrierten Mobilfunknetz zugehörig.
24. Ausführungsform: Verfahren nach einer der Ausführungsformen 1 bis 23, dadurch gekennzeichnet, dass die Übermittlung zusätzlicher möglicher Mobilfunknetzbetreiberkennungen dediziert pro Netz-Teitnehmerendgeräte-Beziehung erfolgt ist, und ein Teilnehmerendgerät (13) bei einem Verbindungswunsch über eines der Verfahren nach den Ausführungsformen 1-23 der-Funkzugangsnetz-Kontrolleinheit (RNC/BSC) die Netzbetreiberkennung (PLMN id) übermittelt, und die Funkzugangsnetz-Kontrolleinheit (RNC/BSC) die entsprechenden Verbindungen zu dem gewünschten Kernnetz (6, 7; 10, 11) des Mobilfunknetzbetreibers bereitstellt.
25. Ausführungsform: Anordnung zum Betrieb von mehreren Mobilfunknetzen, dadurch gekennzeichnet, dass die Mobilfunknetze ein gemeinsames Funkzugangsnetz (9; 12) aber separate Kernnetze (6, 7; 10, 11) aufweisen.
26. Ausführungsform: Anordnung nach Ausführungsform 25, dadurch gekennzeichnet, dass mindestens eines der Mobilfunknetze ein Kernnetzelement (MSC oder GSN) für CS-und PS-Verbindungen sowie eine Funknetzkontrolleinheit (RNC oder BSC) enthalt, wobei eine Funknetzkontrolleinheit (RNC oder BSC) mit mehr als jeweils einem Kernnetzelement für CS-und PS-Verbindungen verbunden ist.
27. Ausführungsform: Anordnung nach Ausführungsform 25 oder 26, dadurch gekennzeichnet, dass ein Funkzugangsnetzwerk (RAN) mit mehr als einem SGSN (für die PS domain) verbunden ist.
28. Ausführungsform: Anordnung nach Ausführungsform 25 oder 26, dadurch gekennzeichnet, dass ein Funkzugangsnetzwerk (RAN) mit mehr als einer MSC (für die CS domain) verbunden ist.
29. Ausführungsform: Verfahren zur Auswahl von Kemnetzelementen von Mobilfunknetzen gemäß Ausführungsform 25, dadurch gekennzeichnet, dass die Auswahl des PLMN bzw. dieser Kernnetzelemente (MSC oder GSN) auf der Signalisierung der Auswahl durch das Teilnehmerendgerät (13), insbesondere aufgrund der signalisierten PLMN id basiert.

### Liste der Bezugszeichen

- 1: Kernnetz Betreiber A
- 2: Kernnetz Betreiber B
- 3: Schnittstelle (lu- bzw. A-Schnittstelle)
- 4: Funkzugangsnetz Betreiber B
- 5: Funkzugangsnetz Betreiber A

- 6: Kernnetz Betreiber A
- 7: Kernnetz Betreiber B
- 8: Schnittstelle
- 9: Gemeinsames Funkzugangsnetz

- 10: Kenrnetz Betreiber A
- 11: Kernnetz Betreiber B
- 12: Gemeinsames Funkzugangsnetz
- 13: Teilnehmerendgerät
- 14: Übertragung PLMN id
- 15: Auswahl PLMN

## Patentansprüche

1. Verfahren zur Bereitstellung bzw. Teilung oder gemeinsamen Nutzung eines Mobilfunk-Funkzugangsnetzwerkes durch mehrere Mobilfunkanbieter, bei dem ein einziges Funkzugangsnetz (9; 12) durch mehrere Mobilfunkanbieter gemeinsam genutzt wird, wobei zur Unterscheidung der Kernnetze (6, 7; 10, 11) der verschiedenen Mobilfunkanbieter die jeweilige Identität der Netzbetreiber (PLMN identity) im Funkzugangsnetzwerk dem Teilnehmer / Teilnehmerendgerät (13) über die Aussendung von mehr als einer Mobilfunkbetreiberkennung (PLMN identity) bereitgestellt wird charakterisiert dadurch, dass die Ausstrahlung von mehr als einer Mobilfunkbetreiberkennung (PLMN identity) auf einem gemeinsamen Organisationskanal (beispielsweise dem Broadcast Control Channel - BCCH) vorgenommen wird, wobei der Teilnehmer / das Teilnehmerendgerät (13) bei Äußerung eines Verbindungswunsches gegenüber dem Funkzugangsnetzwerk (9; 12) durch Signalisierung einer Mobilfunkbetreiberkennung mitteilt, mit welchem der unterschiedlichen Kernnetzwerke (6, 7; 10,11) bzw. PLMNs der Verbindungsaufbau erfolgen soll.

2. Verfahren nach Anspruch 1, **dadurch gekennzeichnet, dass** zur Bereitstellung der Mobilfunkleistungen notwendigen Netzelemente eines Kernnetzes (6, 7; 10 ,11) von jedem der Mobilfunkanbieter separat bereit gestellt werden.

3. Verfahren nach einem der Ansprüche 1-2, **dadurch gekennzeichnet, dass** die Ausstrahlung von mehr als einer PLMN identity in einem System Information Block 1 (SIB1) erfolgt.

4. Verfahren nach einem der Ansprüche 1-3, **dadurch gekennzeichnet, dass** die Ausstrahlung von mehr als einer PLMN identity in einem anderen System Information Block außer dem Master Information Block (MIB) oder dem System Information Block 1 (SIB1) erfolgt.

5. Verfahren nach einem der Ansprüche 1-4 **dadurch gekennzeichnet, dass** der Teilnehmer / das Teilnehmerendgerat (13) bei Äußerung des Verbindungswunsches gegenüber dem Funkzugangsnetzwerk (9; 12) mitteilt, mit welchem der unterschiedlichen Kernnetzwerke (6, 7;10, 11) der Verbindungsaufbau erfolgen soll, und diese Mitteilung auf der Übersendung der PLMN id erfolgt.

6. Verfahren nach einem der Ansprüche 1-5, **dadurch gekennzeichnet, dass** der Teilnehmer / das Teilnehmerendgerät (13) bei Äußerung des Verbindungswunsches gegenüber dem Funkzugangsnetzwerk (9; 12) mitteilt, mit welchem der unterschiedlichen Kernnetzwerke (6, 7; 10, 11) der Verbindungsaufbau erfolgen soll, und diese Mitteilung auf der Übersendung der Netzbetreiberkennung erfolgt, wobei die PLMN identity als Integer (1,2, 3... n) oder bitstring (z.B."001") angegeben wird, und die Festlegung der eigentlichen PLMN identity aus der Reihenfolge des Sendens der unterschiedlichen PLMN identities auf dem BCCH abgeleitet wird.

7. Verfahren nach einem der Ansprüche 1 bis 6, **dadurch gekennzeichnet, dass** die Übermittlung weiterer Mobilfunknetzbetreiberkennungen (bspw. PLMN ids) und damit Netzbetreiber, welche das Teilnehmerendgerät (13) potentiell nutzen darf, auf einer dedizierten Signalisierung zwischen Funkzugangsnetz (9; 12) oder Kernnetz (6, 7; 10,11) und Teilnehmerendgerät (13) erfolgt.

8. Verfahren nach einem der Ansprüche 1 bis 7, **dadurch gekennzeichnet, dass** die Übermittlung zusätzlicher PLMN ids immer dann durchgeführt wird, wenn sich ein Teilnehmerendgerät (13) bei einem Mobilfunknetz zwecks Registrierung anmeldet, einen Dienst aktuell nutzt' (beispielsweise Im Rahmen einer "PDP-Context Activation"), oder seinen aktuellen Aufenthaltsort dem Mobilfunknetz gegenüber anzeigt (z. B. im Fall sich bewegender Teilnehmerendgeräte beispielsweise mittels Location Registration Prozeduren).

9. Verfahren nach einem der Ansprüche 1 bis 8, **dadurch gekennzeichnet, dass** die Übermittlung zusätzlicher möglicher Mobilfunknetzbetreiberkennungen dediziert pro Netz- Teilnehmerendgeräte-Beziehung oder aufgrund einer Ausstrahlung auf dem Organisationskanal BCCH erfolgt ist, und diese Informationen vom Teilnehmerendgerät (13) derart genutzt werden, dass eine Nutzung von Funkzugangsressourcen eines anderen Mobilfunkbetreibers möglich ist, als wären sie zum registrierten Mobilfunknetz zugehörig.

10. Anordnung zum Betrieb von mehreren Mobilfunknetzen, wobei die Mobilfunknetze ein gemeinsames Funkzugangsnetz (9; 12) aber separate Kemnetze (6, 7; 10,11) aufweisen, charakterisiert dadurch, dass für jedes Kernnetz (6, 7,10,11) die Bereitstellung einer eigenen Mobilfunkbetreiberkennung (PLMN id) auf einem gemeinsamen Organisationskanal (BCCH) vorgesehen ist, wobei die Auswahl des Kemnetzes oder die Auswahl von Kernnetzelementen auf der Signalisierung der Auswahl durch das Teilnehmerendgerät (13), insbesondere aufgrund der signalisierten PLMN id basiert

11. Anordnung nach Anspruch 10, **dadurch gekennzeichnet, dass** ein Funkzugangsnetzwerk mit mehr als einem Kernnetzelement für die PS domain verbunden ist.

## Claims

1. Method for the provision or sharing or joint use of a mobile radio access network by several mobile radio providers, in which a single radio access network (9; 12) is jointly used by several mobile radio providers wherein, for distinguishing the core networks (6, 7; 10, 11) of the various mobile radio providers, the respective identity of the network operators (PLMN identity) in the radio access network is provided to the subscriber/subscriber terminal (13) by sending out more than one mobile radio operator identity (PLMN identity), **characterized in that** more than one mobile radio operator identity (PLMN identity) is broadcast on a common control channel (for example the broadcast control channel - BCCH), wherein the subscriber/the subscriber terminal (13), on utterance of a call request to the radio access network (9; 12) communicates, by signalling a mobile radio operator identity, with which of the different core networks (6, 7; 10, 11) or PLMNs the call is to be set up.

2. Method according to Claim 1, **characterized in that** network elements of a core network (6, 7; 10, 11), necessary for providing the mobile radio services, are provided separately by each of the mobile radio providers.

3. Method according to one of Claims 1 and 2, **characterized in that** more than one PLMN identity are broadcast in a System Information Block 1 (SIB1).

4. Method according to one of Claims 1 to 3, **characterized in that** more than one PLMN identity are broadcast in another System Information Block except the Master Information Block (MIB) or the System Information Block 1 (SIB1).

5. Method according to one of Claims 1 to 4, **characterized in that** the subscriber/the subscriber terminal (13), on utterance of the call request to the radio access network (9; 12), communicates with which of the different core networks (6, 7; 10, 11) the call is to be set up and this communication takes place on transmission of the PLMN ID.

6. Method according to one of Claims 1 to 5, **characterized in that** the subscriber/the subscriber terminal (13), on utterance of the call request to the radio access network (9; 12), communicates with which of the different core networks (6, 7; 10, 11) the call is to be set up and this communication takes place on transmission of the network operator identity, wherein the PLMN identity is specified as integer (1, 2, 3 ... n) or bit string (e.g. "001") and the specification of the actual PLMN identity is derived from the order of transmission of the different PLMN identities on the BCCH.

7. Method according to one of Claims 1 to 6, **characterized in that** the communication of further mobile radio network operator identities (e.g. PLMN IDs), and thus network operators which the subscriber terminal (13) may potentially use, takes place on a dedicated signalling between radio access network (9; 12) or core network (6, 7; 10, 11) and subscriber terminal (13).

8. Method according to one of Claims 1 to 7, **characterized in that** the communication of additional PLMN IDs is carried out whenever a subscriber terminal (13) reports to a mobile radio network for registration, currently uses a service (for example as part of a PDP context activation) or indicates its current location to the mobile radio network (e.g. in the case of moving subscriber terminals, for example by means of location registration procedures).

9. Method according to one of Claims 1 to 8, **characterized in that** the communication of additional possible mobile radio network operator identities has taken place dedicated per network subscriber terminal relation or on the basis of a broadcast on the control channel BCCH, and these information items are used by the subscriber terminal (13) in such a manner that a utilization of radio access resources of another mobile radio operator is possible as if they were to belong to the registered mobile radio network.

10. Arrangement for operating several mobile radio networks, wherein the mobile radio networks have a common radio access network (9; 12) but separate core networks (6, 7; 10, 11), **characterized in that** for each core network (6, 7; 10, 11), the provision of a separate mobile radio operator identity (PLMN ID) on a common control channel (BCCH) is provided, wherein the selection of the core network or the selection of core network elements is based on the signalling of the selection by the subscriber terminal (13), particularly due to the signalled PLMN ID.

11. Arrangement according to Claim 10, **characterized in that** a radio access network is connected to more than one core network element for the PS domain.

## Revendications

1. Procédé de fourniture ou de partage ou d'utilisation partagée d'un réseau d'accès radio mobile par une pluralité d'opérateurs mobiles, dans lequel un réseau d'accès radio unique (9 ; 12) est utilisé en commun par plusieurs opérateurs mobiles, dans lequel, pour effectuer une distinction entre les coeurs de réseau (6, 7 ; 10, 11) des différents opérateurs mobiles l'identité respective de l'opérateur de réseau (identité PLMN) est fournie sur le réseau d'accès radio à l'abonné/terminal d'abonné (13) par l'intermédiaire de l'émission de plus d'un identifiant d'opérateur mobile (identité PLMN), **caractérisé en ce que** la diffusion de plus d'un identifiant d'opérateur mobile (identité PLMN) s'effectue sur un canal de commande de diffusion (par exemple le canal Broadcast Control Channel - BCCH), dans lequel l'abonné/le terminal d'abonné (13) communique lors de l'envoi d'une demande de connexion au réseau d'accès radio (9 ; 12) par signalisation d'un identifiant d'opérateur mobile avec lequel doit s'effectuer l'établissement d'une connexion aux différents coeurs de réseau (6, 7 ; 10, 11) ou réseaux PLMN.

2. Procédé selon la revendication 1, **caractérisé en ce que** pour mettre à disposition les services radio mobiles, les éléments de réseau nécessaires d'un coeur de réseau (6, 7 ; 10, 11) sont mis à disposition de manière séparée par chacun des opérateurs mobiles.

3. Procédé selon l'une quelconque des revendications 1-2, **caractérisé en ce que** la diffusion de plus d'une identité PLMN s'effectue dans un bloc d'informations système 1 (SIB1).

4. Procédé selon l'une quelconque des revendications 1-3, **caractérisé en ce que** la diffusion de plus d'une identité PLMN s'effectue dans un bloc d'informations système autre que le bloc d'informations maître (MIB) ou que le bloc d'informations système 1 (SIB1).

5. Procédé selon l'une quelconque des revendications 1-4, **caractérisé en ce que** l'abonné/le terminal d'abonné (13) communique lors de la diffusion de la demande de connexion au réseau d'accès radio (9 ; 12) avec lequel doit s'effectuer l'établissement d'une connexion aux différents coeurs de réseaux (6, 7 ; 10, 11), et **en ce que** cette communication s'effectue par la transmission de l'identifiant (ID) de PLMN.

6. Procédé selon l'une quelconque des revendications 1-5, **caractérisé en ce que** l'abonné/le terminal d'abonné (13) communique lors de la diffusion de la demande de connexion au réseau d'accès radio (9 ; 12) avec lequel doit s'effectuer l'établissement d'une connexion aux différents coeurs de réseaux (6, 7 ; 10, 11) doit, et **en ce que** cette communication s'effectue par transmission de l'identifiant de l'opérateur réseau, dans lequel l'identité PLMN est spécifiée sous la forme d'un entier (1, 2, 3, ... n) ou d'une chaîne binaire (par exemple "001"), et **en ce que** la détermination de l'identité PLMN effective est déduite de la séquence d'envoi des différentes identités PLMN sur le canal BCCH.

7. Procédé selon l'une quelconque des revendications 1-6, **caractérisé en ce que** la transmission d'autres identifiants d'opérateurs de réseaux radio mobiles (par exemple des identifiants PLMN) et par conséquent des opérateurs de réseau qui doivent potentiellement utiliser le terminal d'abonné (13), s'effectue par l'intermédiaire d'une signalisation dédiée entre le réseau d'accès radio (9 ; 12) ou le coeur de réseau (6, 7 ; 10, 11) et le terminal d'abonné (13).

8. Procédé selon l'une quelconque des revendications 1-7, **caractérisé en ce que** la transmission d'identifiants PLMN supplémentaires n'est effectuée que lorsqu'un terminal d'abonné (13) se connecte pour s'enregistrer sur un réseau mobile, lorsqu'il utilise un service à un instant donné (par exemple dans le cadre d'une "activation de contexte PDP"), ou lorsqu'il signale au réseau mobile sa position instantanée (par exemple dans le cas de terminaux d'abonnés se déplaçant, par exemple au moyen de procédures d'enregistrement de position).

9. Procédé selon l'une quelconque des revendications 1-8, **caractérisé en ce que** la transmission d'identifiants d'opérateurs mobiles possible supplémentaires s'effectue de manière dédiée en fonction de chaque relation réseau-terminal d'abonné ou sur la base d'une diffusion sur le canal de commande BCCH, et **en ce que** ces informations sont utilisées par le terminal d'abonné (13) de manière à ce qu'il soit possible d'utiliser des ressources d'accès radio d'un autre opérateur mobile comme si celles-ci appartenaient au réseau mobile enregistré.

10. Dispositif pour la mise en fonctionnement d'une pluralité de réseaux mobiles, dans lequel les réseaux mobiles comportent un réseau d'accès radio commun (9 ; 12) mais des coeurs de réseaux séparés (6, 7 ; 10, 11), **caractérisé en ce que** pour chaque coeur de réseau (6, 7, 10, 11), il prévu de fournir un identifiant d'opérateur de réseau mobile local (ID de PLMN) sur un canal de commande commun (canal BCCH),
dans lequel la sélection du coeur de réseau ou la sélection d'éléments de coeur de réseau se fonde sur la signalisation de la sélection par le terminal d'abonné (13), notamment sur la base de l'ID de PLMN signalé.

11. Dispositif selon la revendication 10, **caractérisé en ce qu'**un réseau d'accès radio est connecté à plus d'un élément de coeur de réseau pour le domaine PS.
